# EUROPEAN PATENT APPLICATION

(11) **EP 1 749 680 A1**
(43) Date of publication of application: **07.02.2007**
(21) Application number: 05734399.8
(22) Date of filing: 21.04.2005
(51) Int. Cl.: B60C 5/00, B60C 9/08

(54) **PNEUMATIC TIRE**

(30) Priority: 25.05.2004 JP 2004154395
(71) Applicant: Bridgestone Corporation, Tokyo 104-0031 (JP)
(72) Inventor: ISHIYAMA, Makoto c/o BRIDGESTONE CORPORATION, Kodaira-shi, Tokyo 1870031 (JP); MOTOORI, Osamu c/o BRIDGESTONE CORPORATION, Kodaira-shi, Tokyo 1870031 (JP)
(74) Representative: Whalley, Kevin
(86) International application number: PCT/JP2005/007594
(87) International publication number: WO 2005/115769

(57) **Abstract**

The present invention provides a pneumatic tire that has a tire structure modified to reduce the road noise and thereby reduce the car interior noise and that exhibits improved high-speed drivability and improved high-speed durability.

The pneumatic tire includes a circular tread, a pair of sidewalls and beads on both sides of the tread, and a carcass extending between bead cores within the pair of beads. A rubber layer having a modulus of elasticity at 100% elongation in the range of 1.0 MPa to 30 MPa and a thickness in the range of 2.0 mm to 5.0 mm is placed inside the carcass and at at least part of a portion around the center of the tread.

## Description

### Technical Field

The present invention relates to a pneumatic tire (hereinafter referred to simply as "tire"), and more particularly to a pneumatic tire that generates a low car interior noise and that exhibits excellent high-speed drivability and excellent high-speed durability.

### Background Art

In general, a pneumatic tire vibrates in various modes when a vehicle is running. In particular, a vibration in the vicinity of 160 Hz to 200 Hz (road noise) sounds as a grating noise for a driver. These vibrations result from a combination of various elements, such as the automobile structure, the suspension structure, the wheel structure, and the tire structure. For example, a vibration at 160 Hz to 200 Hz is known to increase or decrease in a manner that depends on the type of vehicle. However, noise actually exists at frequencies of 160 Hz to 200 Hz, which is generated from a tire and a wheel.

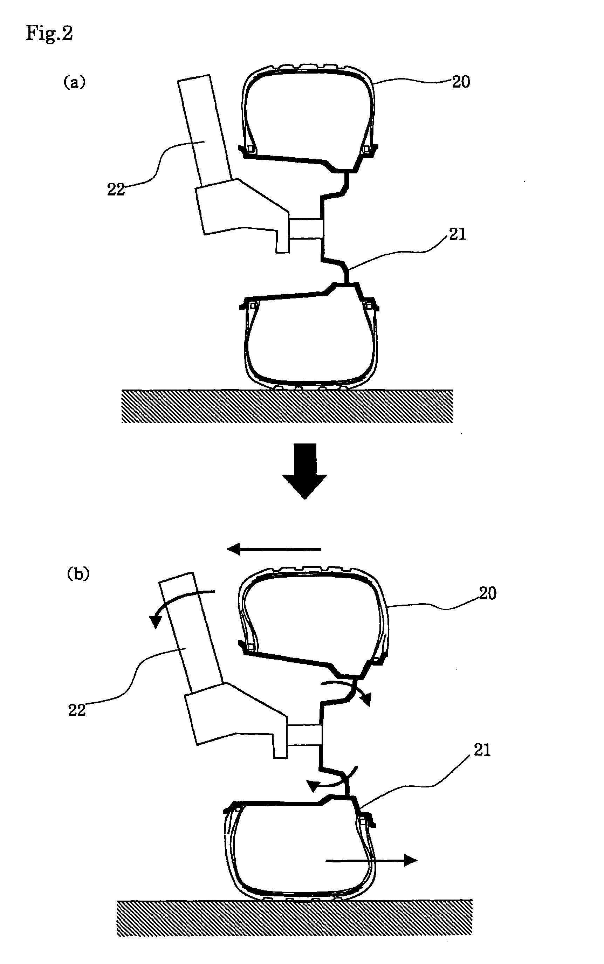

A recent study has reported that a car interior noise around 160 Hz results largely from the rotational vibration of a wheel system around the axis in the direction of movement of a tire. For example, Non-patent Document 1 clearly reported that the vibration at 160 Hz has a good correlation with the vibration mode of a tire perpendicular to the axis in the direction of travel. Specifically, as compared with a nonvibrating state illustrated in Fig. 2(a), in the vibration mode at 160 Hz to 200 Hz illustrated in Fig. 2(b), a tire 20 vibrates in a counterclockwise direction, a wheel 21 vibrates in a clockwise direction, and a shock absorber 22 vibrates in a counterclockwise direction.

Hitherto, automobile manufacturers have tried to reduce the vibration by increasing the rigidity of a suspension. However, the road noise is generated not only at 160 Hz, but also at any frequency band. Under such circumstances, it is difficult to modify automobiles for the all frequency bands, and it should be appropriate to solve the problem by modifying tires. Thus, various technologies for modifying a tire have been proposed.

For example, Patent Document 1 describes a pneumatic rimmed tire in which a tabular member formed, for example, of a polyurethane foam, which is much lighter than a tire or a rim, is placed on an inner surface of a tread or an outer surface of a rim between beads or both in a predetermined area in a predetermined thickness to reduce road noise. Patent Document 2 describes a pneumatic tire in which a damping rubber member having a loss tangent larger than that of other rubber materials of the tire is placed on an inner surface of the tire corresponding to a tread and/or in areas surrounding bead wires to reduce road noise and vibration and thereby improve the ride quality.

As an example of technology for modifying a pneumatic tire, Patent Document 3 describes a pneumatic tire in which a rubber film having an elongation at break of at least 900% and a tensile strength at break of at least 15 MPa is placed on the inner surface of the tire to eliminate the need for repairing a flat tire and to prevent air leakage without causing an increase in weight and deterioration in ride quality. Patent Document 4 describes a pneumatic tire in which an insulation rubber that includes a portion having a reduced thickness in the center area of a tread and that has a thickness in the range of 1.5 to 2.0 mm is placed between a carcass ply and an inner-liner rubber to reduce the weight while maintaining the durability.
Patent Document 1: Japanese Unexamined Patent Application Publication No. 63-275404 (claims etc.)
Patent Document 2: Japanese Unexamined Patent Application Publication No. 4-365605 (claims etc.)
Patent Document 3: Japanese Unexamined Patent Application Publication No. 2003-154823 (claims etc.)
Patent Document 4: Japanese Unexamined Patent Application Publication No. 2002-178714 (claims etc.)
Non-patent Document 1: Yugenyoso moderu niyoru rodonoizu no sasupensyon sindo kaiseki (Suspension vibration analysis of road noise by finite element model); Society of Automotive Engineers of Japan Inc., Academic lecture preprint No. 65-00, Akira Nakamura et. al. (Toyota Motor Corporation)

### Disclosure of Invention

### Problems to be Solved by the Invention

However, the technology for modifying a tire to reduce the car interior noise has not been fully investigated. Thus, there is a need for a technology for reducing the car interior noise more effectively without compromising other performance.

Accordingly, it is an object of the present invention to provide a pneumatic tire that has a tire structure modified to reduce the road noise and thereby reduce the car interior noise and exhibits improved high-speed drivability and improved high-speed durability.

### Means for Solving the Problems

As a result of extensive investigations conducted to solve the problems, the present inventors perfected the present invention by discovering that use of a predetermined member to increase the weight of a tread can reduce the resonant vibration of a suspension, a tire, and a wheel mainly in the vicinity of 160 Hz and can thereby reduce the car interior noise without compromising the drivability and the high-speed durability.

More specifically, a pneumatic tire according to the present invention includes a circular tread, a pair of sidewalls and beads on both sides of the tread, and a carcass extending between bead cores within the pair of beads, wherein
a rubber layer having a modulus of elasticity at 100% elongation in the range of 1.0 MPa to 30 MPa and a thickness in the range of 2.0 mm to 5.0 mm is placed inside the carcass and at at least part of a portion in the vicinity of the center of the tread.

Another pneumatic tire according to the present invention includes a circular tread, a pair of sidewalls and beads on both sides of the tread, and a carcass extending between bead cores within the pair of beads, the carcass being composed of at least two carcass plies, wherein
a rubber layer having a modulus of elasticity at 100% elongation in the range of 1.0 MPa to 30 MPa and a thickness in the range of 2.0 mm to 5.0 mm is placed between the at least two carcass plies and at at least part of a portion in the vicinity of the center of the tread.

In the present invention, the rubber layer is preferably disposed in the tire width direction in an area with a width equal to or narrower than the tread width, particularly, in an area with a width in the range of 60% to 90% of the tread width. Furthermore, the thickness at the center of the rubber layer is suitably larger than the thickness at both ends of the rubber layer.

The term "tread width" as used herein refers to the distance in the direction of an axis between both ends of a tread in contact with the ground. The term "both ends of a tread in contact with the ground" as used herein refers to ends having the maximum width, that is, both ends in contact with the ground, of a footprint under the conditions of a rim, a load, and an internal pressure described below. The term "rim" as used herein refers to a standard rim (or "approved rim" or "recommended rim") in an application size described in the following specifications. The term "load" as used herein refers to the maximum load (maximum load rating) of a single tire in an application size described in the following specifications. The term "internal pressure" as used herein refers to an air pressure corresponding to the maximum load (maximum load rating) of a single tire in an application size described in the following specifications. The "specification" is defined by an industrial specification that is valid in an area where a tire is produced or is used. For example, it is defined by "Year Book issued by The Tire and Rim Association Inc." in the U.S.A., "Standards Manual issued by The European Tire and Rim Technical Organization" in Europe, and "JATMA Year Book" issued by Japan Automobile Tire Manufacturers Association.

### Advantages of the Invention

According to the present invention, a rubber layer placed at a predetermined portion can effectively reduce a resonant vibration of a suspension, a tire, and a wheel in the vicinity of 160 Hz to 200 Hz, which causes road noise in question, and can thereby greatly reduce the car interior noise. In addition, the thickness of the rubber layer in the center is larger than that in both ends. This can provide an ideal footprint of the tire at high speed and improve the high-speed handling and high-speed durability.

As described above, Patent Document 3 describes a pneumatic tire including a predetermined rubber film inside the tire. This rubber film must have an elongation at break of at least 900% to prevent air leakage from a flat tire. However, a rubber layer according to the present invention aims to increase the weight, as described below, and therefore does not need such a high elongation at break. For example, the elongation at break of a rubber layer according to the present invention is supposed to be about 700% or less. Patent Document 4 describes a pneumatic tire including a predetermined insulation rubber disposed between a carcass ply and an inner liner rubber. This insulation rubber has a thickness approaching substantially zero in the center area of a tread. Hence, Patent Document 4 is different in technical idea from the present invention, in which it is important to place a rubber layer in the vicinity of the center area of a tread.

### Brief Description of the Drawings

Fig. 1 is a cross-sectional view of a pneumatic tire according to a suitable example of the present invention.
Fig. 2(a) is a schematic view of a tire, a wheel, and their surroundings in a nonvibrating state, and Fig. 2(b) is a schematic view of a tire, a wheel, and their surroundings in a vibration mode of 160 Hz to 200 Hz.
Fig. 3 is a schematic view of a tire according to the present invention, a wheel, and their surroundings in a vibration mode of 160 Hz to 200 Hz.
Fig. 4 is (a) a cross-sectional view, (b) a footprint when a vehicle run at a speed of 40 km/h, and (c) a footprint when a vehicle run at a speed of 180 km/h of a sample tire according to a comparative example.
Fig. 5 is (a) a cross-sectional view, (b) a footprint when a vehicle run at a speed of 40 km/h, and (c) a footprint when a vehicle run at a speed of 180 km/h of a sample tire according to a first example.
Fig. 6 is (a) a cross-sectional view, (b) a footprint when a vehicle run at a speed of 40 km/h, and (c) a footprint when a vehicle run at a speed of 180 km/h of a sample tire according to a second example.

### Reference Numerals

- 1: bead core
- 2: carcass
- 3, 3B, 3C: rubber layer
- 4: belt layer
- 5: tread rubber layer
- 6: straight groove
- 10, 10A to 10C: pneumatic tire
- 11: tread
- 12: sidewall
- 13: bead
- 21: wheel
- 22: shock absorber
- P: shaft center of wheel

### Best Mode for Carrying Out the Invention

Suitable embodiments of the present invention will be described in detail below.

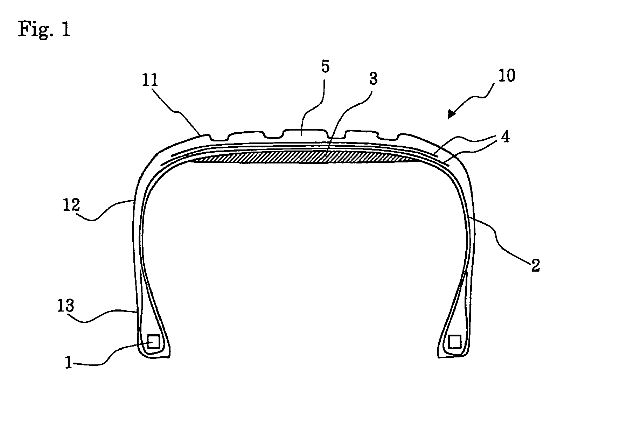

Fig. 1 is a cross-sectional view of a pneumatic tire according to a suitable example of the present invention. As illustrated in Fig. 1, a pneumatic tire 10 according to the present invention includes a circular tread 11, a pair of sidewalls 12 and beads 13 on both sides of the tread, and a carcass 2 extending between bead cores 1 within the pair of beads 13.

In the present invention, as illustrated in Fig. 1, a rubber layer 3 is placed inside a tread 11 of a tire 10. The rubber layer 3 must be placed inside the carcass 2. Alternatively, when the carcass is composed of at least two carcass plies, the rubber layer 3 may be placed between the at least two carcass plies. The reason is described below.

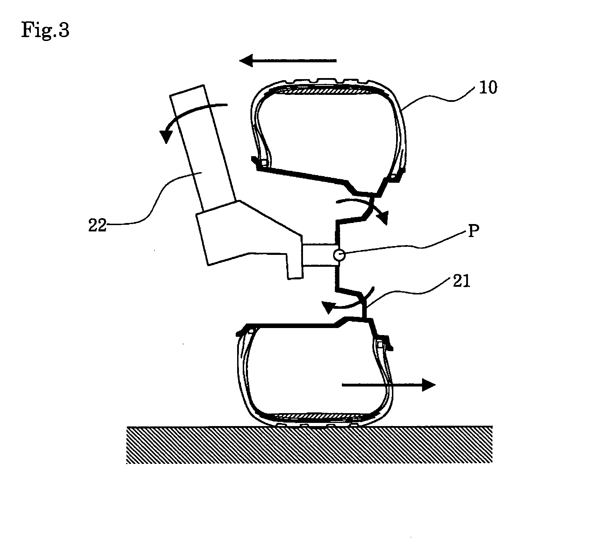

In the tire 10 according to the present invention, the placement of the rubber layer 3 causes an increase in weight. This can increase the moment of inertia of the tire and the wheel. This increase in the moment of inertia effectively reduces the rotational vibration mode in the tire 10 and the wheel 21 illustrated in Fig. 3. Hence, the car interior noise can be reduced. A greater distance between the point of weight increase and the center of rotation or a shaft center P of the wheel 21 in this embodiment results in a larger increase in the moment of inertia. In view of a mechanism to reduce the vibration by an increase in the moment of inertia, it is effective to place a weight on the tread rather than the sidewalls.

In a tire, the tread 11 has a laminated structure of the carcass (carcass ply) 2, belt layers 4, and a tread rubber layer 5. When a rubber serving as a weight is attached to the tread rubber layer 5, the thickness of the tread increases, and the tread 11 tends to lean to one side when a vehicle makes a turn. This results in poor drivability. Furthermore, when an additional rubber is attached to the tread rubber layer, the amount of rubber that is compressed and is deformed on a road surface during the rotation of the tire increases. This may increase the rolling resistance. Hence, it is not preferable to attach a rubber to the tread rubber layer 5 to increase the weight.

A rubber may be placed between the belt layers. However, the laminated belt layers 4 are interlaced with each other to ensure their rigidity. The rubber placed between the belt layers 4 separates the interlacing belt layers and displaces their relative positions. This greatly decreases the rigidity of the belt layers resulting from the interlacing layers. In other words, when a rubber is placed between a first belt layer and a second belt layer (the distance between the first belt layer and the second belt layer is thus increased), the deformation of the rubber between the belt layers decreases the rigidity of the interlacing layers, thus lowering the drivability of the tire. The same holds true for a rubber placed between a first (inner) belt and the carcass 2. This is not desirable because the rigidity of the interlacing layers decreases.

By contrast, a rubber placed inside the carcass 2 is superior to these in that it does not affect the interlacing layers. In this case, the thickness of the tread rubber layer 5 is also not changed. Therefore, the tire does not lose its inherent performance. When a rubber is placed between two carcass plies, in the current situation in which radial tires are mainstream, the two carcass plies are often placed at the same carcass angle (in radial tires, 90 degrees with respect to the circumferential direction). The carcass plies are therefore not interlaced with each other. Hence, the rubber does not lower the rigidity of the tread.

Thus, the rubber layer 3 is basically placed inside the carcass 2. When the carcass is composed of at least two carcass plies, the rubber layer 3 may be placed between the carcass plies.

Furthermore, the rubber layer 3 must be placed at at least part of a portion in the vicinity of the center of the tread 11. Preferably, the rubber layer 3 is placed in the tire width direction in an area with a width equal to or narrower than the tread width. When the rubber layer 3 is placed in an area having a width larger than the tread width, the rubber layer 3 is also attached to the sidewalls. Because the sidewalls deform greatly when the tire rolls, the rubber attached to the sidewalls also deforms greatly and generates heat. The tire is therefore easily damaged at the sidewalls. By contrast, the tread has very high rigidity because of the belt layers 4. The deformation of the tread is therefore smaller than that of the sidewalls. As described above, a greater distance between the point of weight increase and the shaft center P of the wheel results in a larger increase in the moment of inertia. The rubber layer 3 is therefore optimally placed inside the carcass 2 of the tread 11 in an area with a width equal to or narrower than the tread width. Specifically, the rubber layer 3 can be placed in an area with a width in the range, for example, of 60% to 90% of the tread width.

The rubber layer 3 has a modulus of elasticity at 100% elongation in the range of 1.0 MPa to 30 MPa and preferably of 1.5 MPa to 10.0 MPa. When the modulus of elasticity at 100% elongation is less than 1.0 MPa, the rubber layer 3 is so soft that it is difficult to maintain the predetermined shape when compressed by a vulcanization bladder. When the modulus of elasticity at 100% elongation is more than 30 MPa, the rubber layer 3 is so rigid that the out-of-plane flexural rigidity of the tread increases. This causes a decrease in footprint and poor drivability. The rubber layer 3 must have a thickness of at least 2 mm. When the thickness is less than 2 mm, an increase in weight due to the rubber layer 3 is small, and the effect of decreasing road noise is hardly achieved. In general, an inner liner (not shown) is placed inside the carcass 2. Because the thickness of the inner liner is typically about 0.5 mm, the addition of a rubber having a thickness of about 0.5 mm has only an effect of the inner liner. Hence, the rubber layer 3 must have a thickness of at least 2 mm to achieve a sufficient effect. However, when the rubber layer 3 has a thickness of more than 5 mm, the tire is so heavy that the steering response deteriorates significantly and the drivability deteriorates. Hence, the rubber layer 3 must have a thickness of 5 mm or less. Preferably, the rubber layer 3 having a thickness in the range of about 2.0 mm to 3.0 mm can achieve an enhanced effect. When there is an inner liner, a rubber layer according to the present invention may be placed inside or outside the inner liner.

More suitably, in terms of high-speed drivability, the thickness of the rubber layer 3 in the vicinity of the center of the tread is larger than the thickness of the ends of the tread. In general, when a tire rolls at high speed, the shoulders of the tire expand outside greatly owing to the centrifugal force. While the footprint of the tire is an ideal rectangle at a low speed, the footprint is a butterfly shape at a high speed of 150 km/h or more because of the expanded shoulders. Because of the expanded shoulders, the length of the footprint of the shoulders and the ground pressure of the shoulders tend to increase. Such a footprint results in poor drivability. Furthermore, because a shoulder is put under heavy load, the tire is easily damaged at the shoulder. The ideal footprint of the tire rolling at high speed is a rectangle as in a low speed.

Preferably, in the present invention, the thickness of the rubber layer 3 disposed inside the carcass 2 is preferably large at the center and is small at the shoulders at both ends. This increases the weight and the centrifugal force at the center, thus expanding the center. The shoulders of the rubber layer 3 are thin and have a small centrifugal force. Thus, the center of the tire expands more easily than the shoulders when the tire rolls at high speed. This can solve the problem of existing tires that the footprint has a butterfly shape when the tire rolls at high speed because of the expanded shoulders. Furthermore, the rubber layer 3 placed only at the center of the tread to increase the weight at the center relative to the shoulders can achieve the same effect and can improve high-speed drivability and high-speed durability.

A rubber for use in the rubber layer 3 is not limited to a certain rubber and may be any rubber that is used in tires. Examples of the rubber include an acrylonitrile-butadiene copolymer rubber (NBR), an acrylonitrile-styrenebutadiene copolymer rubber (NSBR), a styrene butadiene rubber (SBR), a butadiene rubber (BR), a natural rubber (NR), an isoprene rubber (IR), a styrene isoprene rubber (SIR), a styrene isoprene butadiene rubber (SIBR), a butyl rubber (IIR), and a halogenated butyl rubber (Hal-IIR).

In the present invention, it is only important to place the predetermined rubber layer 3 at a predetermined position. The tire structure, the materials of the tire, the qualities of the materials, and the like can appropriately be selected by an ordinary method without limitation. For example, the surface of the tread 11 of the tire according to the present invention has an appropriate tread pattern, and stiffeners extending generally in the radially outside direction are placed between the main body of the carcass 2 extending between bead cores 1 and folded portions around the bead cores 1.

### EXAMPLES

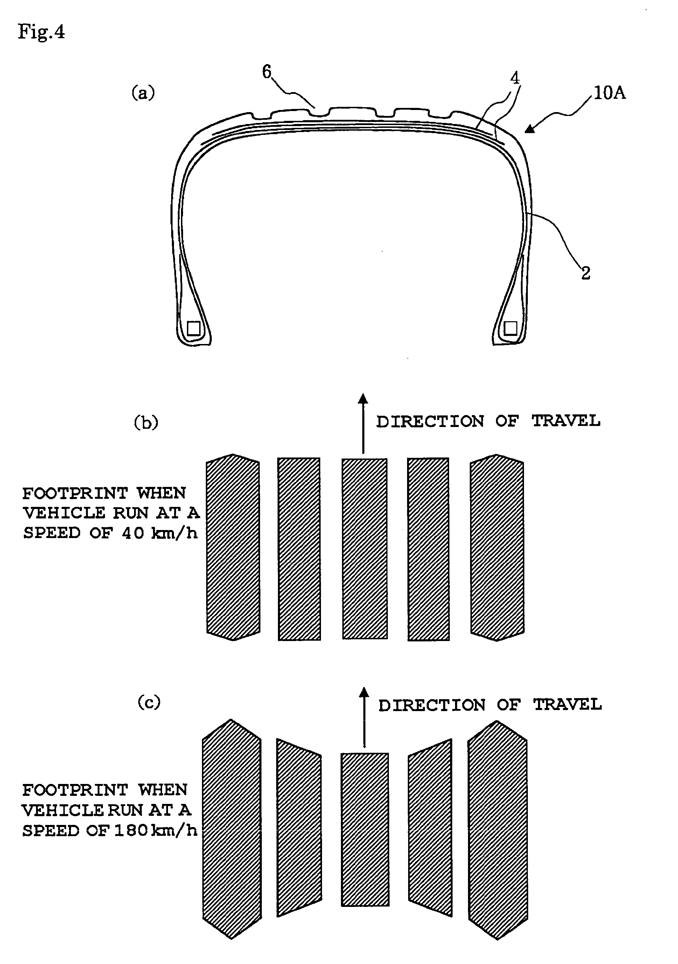

The specific effects of the present invention are described below using a PSR185/60R14 pneumatic tire illustrated in Figs. 4 to 6.

### COMPARATIVE EXAMPLE

A tire 10A illustrated in Fig. 4(a) is composed of two polyamide (nylon®) (a second ply is not shown) carcass plies 2 (90 degrees with respect to the circumferential direction), two steel belts 4 (interlacing with each other at 24 degrees with respect to the circumferential direction), and a pair of nylon layers (not shown). The tread has four straight grooves 6. The tire 10A was a typical existing passenger car tire and had a tread width of 185 mm.

### EXAMPLE 1

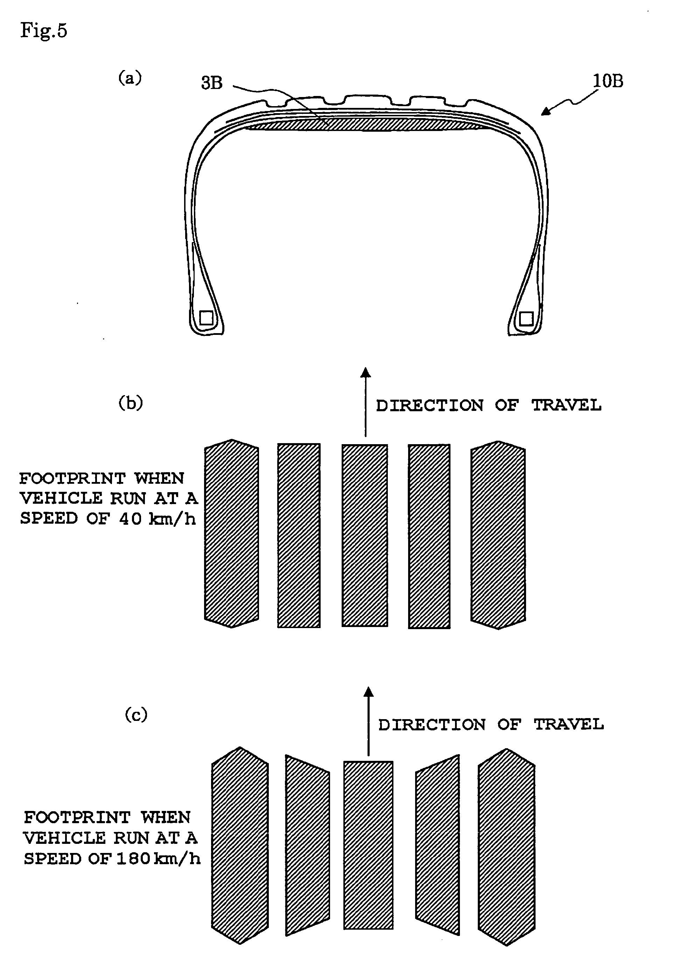

A tire 10B illustrated in Fig. 5(a) was produced by attaching a rubber layer 3B having a thickness of 3 mm and a width of 120 mm to an inner surface of an inner carcass ply 2 corresponding to a tread 11 of the tire 10A illustrated in Fig. 4(a). The rubber layer 3B was formed of a rubber of the same type as a coating rubber of a carcass ply and had a modulus of elasticity at 100% elongation of 2.0 MPa.

### EXAMPLE 2

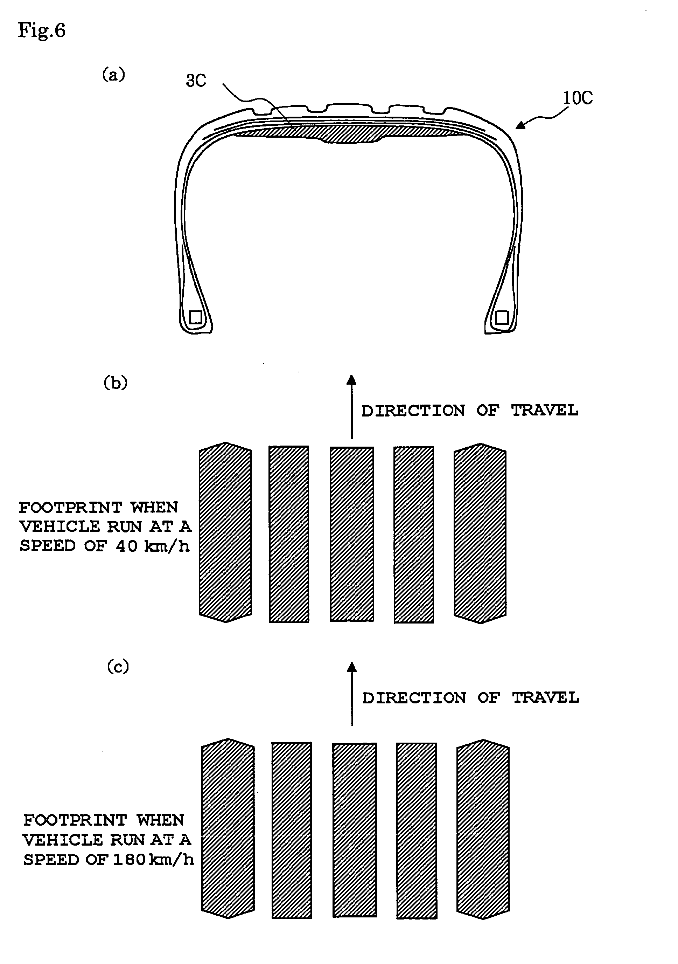

A tire 10C illustrated in Fig. 6(a) was produced by attaching a rubber layer 3C to the carcass 2 of the tread 11, as in the tire 10B. The rubber layer 3C had a modulus of elasticity at 100% elongation of 2.0 MPa. The rubber layer 3C had a width of 140 mm and different thicknesses at the center and the shoulders (both ends). The thickness of a portion having a width of 60 mm around the center was 4 mm and the thickness in the other portions was 2 mm. The weights of the tire 10B and the tire 10C were larger by about 1 kg than that of the tire 10A.

### (Measurement of car interior noise)

The car interior noise of the sample tires 10A to 10C were measured while a vehicle is moving. The-vehicle was a common passenger car of 1800 cc displacement equipped with a strut type front suspension. The car interior noise was measured when the vehicle equipped with each sample tires run at a speed of 60 km/h on a common road.

A peak frequency appeared at about 170 Hz. When the sound pressure level at about 170 Hz of the tire 10A according to the comparative example was taken as 100, the sound pressure level at a peak frequency in the vicinity of 170 Hz of the tire 10B according to the first example was decreased to 70. The sound pressure level at a peak frequency in the vicinity of 170 Hz of the tire 10C according to the second example was decreased to 68. These results show that the rubber layer 3 placed inside the carcass 2 can reduce a vibration in the vicinity of 160 Hz to 200 Hz, which is the vibration mode of a suspension, a wheel, and a tire.

### (Handling test)

The handling test was performed with a vehicle equipped with each sample tires 10A to 10C at high speed. An experienced driver operated the vehicle on a test truck at a high speed of 150 km/h and changed lanes. The response and the handling of the vehicle were evaluated. The tire 10A scored 6 points (Comparative Example), the tire 10B scored 7 points (Example 1), and the tire 10C scored 8 points (Example 2) on a scale of one to ten. The larger value indicates better handling.

### (Evaluation of footprint)

The footprint of each sample tire rolling at high speed was measured. The footprint was measured by forming a hole having a depth of 1.5 meters in part of a test truck, covering the hole with a glass plate, and taking a photograph of the footprint through the glass. The photograph was taken at the instant at which a tire traveled on the glass plate to evaluate the footprint. The measurement was performed at speeds of 40 km/h and 180 km/h. The results are shown in (b) (at a speed of 40 km/h) and (c) (at a speed of 180 km/h) in each figure.

As illustrated in Fig. 4(b) to Fig. 6(b), all the tires had similar square footprints when a vehicle ran at a speed of 40 km/h. As illustrated in Fig. 4(c), the footprint of the tire 10A according to the comparative example had a butterfly shape at a high speed of 180 km/h because of the expanded shoulders. By contrast, as illustrated in Fig. 5(c), the footprint of the tire 10B according to the first example slightly assumed a butterfly shape, but was closer to square than the tire 10A according to the comparative example was. As illustrated in Fig. 6(c), the footprint of the tire 10C according to the second example was square and was almost the same as the footprint when a vehicle run at a speed of 40 km/h. Hence, the improvement of the high-speed handling was probably resulted from the rubber layer 3 placed inside the carcass 2, which increased the centrifugal force at the center of the tread, thus preventing the footprint from assuming a butterfly shape.

### (Evaluation of high-speed durability)

The high-speed durability of the sample tires 10A to 10C was evaluated in a room. A tire was pushed against a drum having a diameter of 3 m under a load of 5 kN and was rolled at a camber angle of 0 degrees, a slip angle of 1 degree, and a speed of 100 km/h. When the tire was successfully rolled at a speed of 100 km/h for 10 min, the speed was increased by 10 km/h, that is, the tire was rolled at a speed of 110 km/h. When the tire was also successfully rolled for 10 min, the speed was increased by 10 km/h. In this way, the speed at which the tire blew out was measured by increasing the tire speed by 10 km/h. Higher the speed at which the tire blows out, higher the high-speed durability is. When the high-speed durability of the tire 10A according to the comparative example was taken as 100, that of the tire 10B according to the first example was 110 and that of the tire 10C according to the second example was 115. These results showed that the tire 10B and the tire 10 according to the examples had high-speed durability.

## Claims

1. A pneumatic tire comprises a circular tread, a pair of sidewalls and beads on both sides of the tread, and a carcass extending between bead cores within the pair of beads, wherein
a rubber layer having a modulus of elasticity at 100% elongation in the range of 1.0 MPa to 30 MPa and a thickness in the range of 2.0 mm to 5.0 mm is placed inside the carcass and at at least part of a portion in the vicinity of the center of the tread.

2. A pneumatic tire comprises a circular tread, a pair of sidewalls and beads on both sides of the tread, and a carcass extending between bead cores within the pair of beads, the carcass being composed of at least two carcass plies, wherein
a rubber layer having a modulus of elasticity at 100% elongation in the range of 1.0 MPa to 30 MPa and a thickness in the range of 2.0 mm to 5.0 mm is placed between the at least two carcass plies and at at least part of a portion in the vicinity of the center of the tread.

3. The pneumatic tire according to Claim 1 or 2, wherein the rubber layer is disposed in the tire width direction in an area with a width equal to or narrower than the tread width.

4. The pneumatic tire according to Claim 1 or 2, wherein the thickness at the center of the rubber layer is larger than the thickness at both ends of the rubber layer.

5. The pneumatic tire according to Claim 1 or 2, wherein the rubber layer is disposed in the tire width direction in an area with a width in the range of 60% to 90% of the tread width.
